# FASCICULE DE BREVET EUROPEEN

(11) **EP 3 735 370 B1**
(45) Date de publication et mention de la délivrance du brevet: **26.01.2022**
(21) Numéro de dépôt: 18839822.6
(22) Date de dépôt: 13.12.2018
(51) Int. Cl.: B62D 35/02

(54) **CARENAGE D'UN CHASSIS DE VEHICULE AUTOMOBILE, MUNI D'UNE OUVERTURE DE DEGAGEMENT D'UNE ATTACHE D'UN CONDUIT A UNE PLATEFORME DU CHASSIS**
VERKLEIDUNG EINES KRAFTFAHRZEUGCHASSIS MIT EINER FREIGABEÖFFNUNG FÜR EINEN BÜGEL ZUR BEFESTIGUNG EINES KANALS AN EINER PLATTFORM DES CHASSIS
FAIRING OF A MOTOR VEHICLE CHASSIS, PROVIDED WITH A RELEASE OPENING FOR A SHACKLE FOR ATTACHING A DUCT TO A PLATFORM OF THE CHASSIS

(30) Priorité: 04.01.2018 FR 1850034
(43) Date de publication de la demande: 11.11.2020
(73) Titulaire: PSA Automobiles SA, 78300 Poissy (FR)
(72) Inventeur: BERTH, Stéphane, 92320 CHATILLON (FR)
(86) Numéro de dépôt international: PCT/FR2018/053242
(87) Numéro de publication internationale: WO 2019/135033

(56) Documents cités:
- DE-A1- 10 307 634
- DE-A1- 19 615 235
- DE-A1-102016 014 319

## Description

La présente invention relève du domaine des véhicules automobiles, en ce qui concerne l'agencement des carénages de fond installés sous une plateforme, elle-même montée sous le châssis d'un véhicule automobile. L'invention concerne plus spécifiquement l'aménagement de l'espace qui est ménagé entre la plateforme et les carénages pour le passage de conduits, notamment des câbles électriques et/ou des conduites de fluide.

Un véhicule automobile comprend un châssis sur lequel sont montés divers équipements du véhicule. Plus spécifiquement, des éléments de fond sont installés sous la caisse du véhicule en étant fixés à une plateforme du châssis, sur laquelle peuvent être montés divers équipements du véhicule.

Parmi de tels éléments de fond, des carénages permettent de protéger un ou plusieurs équipements de fond installés sous la plateforme. Les carénages sont aussi couramment configurés en organes aérodynamiques qui permettent notamment d'améliorer la stabilité du véhicule en progression et/ou de réduire sa traînée. Les carénages sont aussi potentiellement exploités pour canaliser l'air s'écoulant sous la caisse, afin de refroidir un ou plusieurs équipements du véhicule.

Un tel carénage est globalement plan et est installé sous la plateforme, à laquelle le carénage est fixé au moyen de dispositifs de fixation répartis dans son plan général. Un entretoisement entre la plateforme et un ou plusieurs carénages permet de ménager un espace entre eux, qui peut alors être exploité pour le passage d'équipements de fond logés à l'intérieur dudit espace. Un tel entretoisement est par exemple ménagé par des protubérances localisées dont sont munis la plateforme et/ou le ou les carénages.

Cependant dans ce contexte, il est notamment à tenir compte d'un antagonisme entre des contraintes liées aux extensions successives en élévation de divers volumes du véhicule. Tel est plus spécifiquement le cas entre un premier volume s'étendant en élévation entre le plan de roulage du véhicule et les carénages et un deuxième volume ménagé entre les carénages et la plateforme.

Le premier volume est défini en élévation par la distance de séparation entre les carénages et le plan de roulage du véhicule, couramment dénommée garde au sol. Le deuxième volume, ci-après dénommé soubassement, est considéré défini en élévation par l'espace ménagé entre la plateforme et les carénages qui sont d'épaisseur faible par rapport à l'élévation dudit espace.

La garde au sol est recherchée suffisamment importante pour préserver les équipements de fond des heurts pouvant être provoqués par des obstacles au sol, tels qu'un trottoir par exemple. Inversement, l'élévation du soubassement est recherchée la plus faible possible pour éviter de restreindre le volume disponible du véhicule en surplomb de la plateforme, tout en ménageant un écart de sécurité entre les carénages et la plateforme tenant compte de l'éventuelle présence d'équipements de fond entre eux.

Une recherche constante est donc de trouver une solution procurant un compromis entre au moins ces deux contraintes. Par exemple, il est courant de ménager un passage longitudinal sous la plateforme entre deux carénages latéralement adjacents pour loger une ligne d'échappement, tel qu'il ressort du document US2016/0339970 (MAZDA MOTOR CORPORATION) par exemple.

Le document DE102016014319 décrit un ensemble d'éléments de carrosserie de fond d'un châssis de véhicule automobile, comprenant une plateforme sous laquelle est fixe au moins un carénage globalement plan en ménageant entre eux un soubassement du châssis, la plateforme étant munie d'au moins une attache qui est configurée pour la fixation d'au moins un conduit et qui s'étend à l'intérieur du soubassement au moins suivant une direction en élévation perpendiculaire au plan global du carénage.

Le document DE19615235 décrit un élément de garnissage faisant face au plancher du véhicule, sur lequel se trouve au moins un dispositif de support pour au moins un fil électrique.

Le document DE10307634 décrit un élément de garnissage faisant face au plancher du véhicule, sur lequel se trouve un dispositif de support pour un faisceau de conducteurs électriques.

Une telle solution permet de loger la ligne d'échappement dans l'espace délimité par le soubassement malgré son extension en élévation conséquente et/ou compte tenu de la chaleur qu'elle produit. En outre, une telle solution permet de simplifier les opérations de contrôle et/ou de maintenance de la ligne d'échappement.

Ceci présente cependant l'inconvénient d'exposer à de potentielles dégradations la ligne d'échappement, qui n'est pas ou peu protégée par les carénages. De telles dégradations peuvent être par exemple provoquées par la projection de particules contre la ligne d'échappement, gravillons notamment.

Une exposition d'autres éléments de fond à de telles dégradations n'est cependant pas envisageable. Tel est notamment le cas pour des conduits d'acheminement d'énergie électrique et/ou de fluide par exemple, comprenant un câble et/ou un ou plusieurs faisceaux de câbles électriques, et/ou encore des conduites de fluide. Il en ressort qu'il est opportun de loger de tels conduits à l'intérieur du soubassement délimité entre la plateforme et les carénages.

Cependant dans ce cas, ceci tend à accroître significativement l'élévation du soubassement. En effet, le ou les conduits sont alors fixés via des attaches équipant la plateforme, en différents points d'attache répartis le long des conduits qui s'étendent à l'intérieur du soubassement. De telles attaches présentent une extension significative en élévation et sont en outre placées en élévation à distance des carénages, conformément à une distance de consigne.

Il apparaît dès lors une troisième contrainte dans le cadre de la recherche d'une solution visant à limiter ladite élévation du soubassement, portant sur le respect de ladite distance de consigne autorisant l'installation des conduits à l'intérieur du soubassement.

Dans ce contexte, la présente invention a pour objet un ensemble d'éléments de carrosserie de fond d'un châssis de véhicule automobile, comprenant une plateforme sous laquelle est fixé au moins un carénage. La plateforme est munie d'au moins une attache configurée pour la fixation d'au moins un dit conduit à l'intérieur d'un dit soubassement ménagé entre la plateforme et le carénage.

L'invention a aussi pour objet un châssis de véhicule automobile muni d'un ensemble d'éléments de carrosserie conforme à l'invention.

Le but principal de l'invention est de proposer une solution permettant de loger le ou les conduits à l'intérieur du soubassement, en tenant compte des diverses contraintes précédemment exposées.

Plus particulièrement, il est recherché par l'invention de protéger le conduit à l'intérieur du soubassement ménagé entre la plateforme et le ou les carénages.

Plus particulièrement encore, il est recherché par l'invention de procurer une telle protection en respectant une garde au sol adaptée et en limitant au mieux l'extension en élévation du soubassement, et ceci en respectant ladite distance de consigne.

Un autre but de l'invention est de rechercher la solution principalement visé en limitant les coûts induits par la présence de l'attache à l'intérieur du soubassement, dans le contexte d'une concurrence économique notoirement sévère dans le domaine automobile.

Les buts visés par la présente invention sont atteints isolément ou en combinaison par application des dispositions qui suivent.

L'ensemble d'éléments de carrosserie de l'invention comprend une plateforme sous laquelle est fixé au moins un carénage globalement plan. La plateforme et le carénage ménagent entre eux un soubassement du châssis. La plateforme est munie d'au moins une attache qui est configurée pour la fixation d'au moins un conduit. L'attache s'étend à l'intérieur du soubassement au moins suivant une direction en élévation perpendiculaire au plan global du carénage.

Il est ainsi compris que ledit soubassement est formé par un espace délimité entre la plateforme et le carénage. Le conduit est compris comme une notion globale relative à un organe d'acheminement d'électricité ou de fluide. Ainsi, ledit au moins un conduit est susceptible de comprendre par exemple au moins un câble électrique et/ou au moins un faisceau de câbles électriques, et/ou encore une conduite d'acheminement d'un fluide.

Dans ce contexte, un ensemble d'éléments de carrosserie conforme à l'invention est reconnaissable en ce que le carénage comporte une ouverture qui s'étend en regard au moins de la totalité de l'attache et qui est éloignée en élévation de l'attache d'une distance conforme à une distance de consigne minimale admise de séparation en élévation entre l'attache et le carénage.

Tel que précédemment visé, la distance de consigne est notamment une distance prédéfinie de séparation en élévation entre l'attache et le carénage à l'intérieur du soubassement, prenant en compte un écart de protection mécanique de l'attache et/ou du conduit vis-à-vis du carénage. A titre indicatif, ladite distance de consigne au moins égale à 10 mm est satisfaisante.

La présence de l'ouverture permet de limiter l'extension en élévation du soubassement tout en conservant une garde au sol satisfaisante et en respectant la distance de consigne. Plus particulièrement, l'ouverture permet de disposer l'agrafe à ladite distance de consigne sans avoir à augmenter l'extension du carénage vers le plan de roulage du véhicule, comme par exemple en ménageant une alvéole de logement de l'agrafe faisant saillie à la face du carénage orientée vers le plan de roulage du châssis.

En outre, l'ouverture ménage une fenêtre à travers laquelle un observateur est apte à vérifier rapidement depuis l'extérieur du véhicule la qualité et/ou la pérennité de la fixation du conduit procurée par l'attache. Une telle opération de vérification peut ainsi être rapidement effectuée à moindres coûts.

Selon une forme de réalisation, une ceinture de renfort intégrée au carénage est ménagée le long du bord périphérique de l'ouverture.

La ceinture de renfort limite une fragilisation du carénage pouvant résulter de la présence de l'ouverture, renforce le bord périphérique de l'ouverture et conforte le maintien en conformation de l'ouverture. Une fragilisation du carénage en raison de l'ouverture pourrait être conséquente, notamment dans le cas préféré où le carénage est obtenu par moulage d'un matériau plastique.

Selon une forme de réalisation, la ceinture est configurée en gouttière orientée vers l'intérieur du soubassement. Une telle gouttière permet de collecter l'humidité présente à l'intérieur du soubassement et de l'évacuer hors du soubassement à travers l'ouverture.

Selon une forme de réalisation, la ceinture s'étend hors du soubassement, en étant configurée en écran à l'encontre d'une projection de particules à travers l'ouverture depuis l'extérieur du soubassement.

L'attache et/ou le bord de l'ouverture sont ainsi préservé de manière pérenne de dégradations conséquentes résultant d'une projection de particules, gravillons notamment, lorsque le véhicule est en progression.

Selon une forme de réalisation, la ceinture comprend une nervure qui est ménagée au bord périphérique de l'ouverture et qui s'étend en élévation à l'intérieur du soubassement.

Une telle nervure procure un renfort efficace du bord de l'ouverture sans induire un accroissement de la dimension du carénage vers le plan de roulage du châssis, ou autrement dit une réduction de la garde au sol. En outre, la nervure peut avantageusement participer à la formation de la gouttière.

Selon une forme de réalisation, la ceinture comprend un renflement du carénage qui est ménagé en bordure du bord périphérique de l'ouverture et qui s'étend hors du soubassement.

Le renflement est apte à procurer un renfort efficace du bord de l'ouverture tout en étant d'une extension limitée en élévation vers l'extérieur du soubassement. En outre, le renflement peut avantageusement participer à la formation de la gouttière.

De préférence, la ceinture est conjointement formée du renflement et de la nervure ménagée en prolongement l'un de l'autre. Ceci permet de procurer un renfort efficace du bord de l'ouverture tout en limitant au mieux l'extension en élévation du renflement hors du soubassement. La ceinture peut être aisément intégrée au carénage lors de sa fabrication par moulage.

Selon une forme de réalisation, le renflement présente une paroi qui est inclinée par rapport au plan global d'extension du carénage.

L'inclinaison de la paroi ménageant le renflement confère à la ceinture sa configuration en écran de protection de l'agrafe et/ou du conduit vis-à-vis d'une projection de particules à travers l'ouverture depuis l'extérieur du soubassement. L'extension en élévation de la paroi est ainsi limitée, une inclinaison à faible pente de la paroi pouvant être suffisante pour procurer une protection efficace de l'agrafe et/ou du conduit vis-à-vis des particules. Plus particulièrement, une pente modérée d'inclinaison de la paroi est identifiable en tenant compte de la distance de consigne séparant l'attache du carénage.

Selon une forme de réalisation, la gouttière est délimitée entre le renflement et la nervure qui sont ménagés en prolongement l'un de l'autre. La nervure comporte au moins une échancrure de drainage vers l'ouverture de l'humidité collectée par la gouttière.

Autrement dit, la gouttière est ménagée en périphérie de l'ouverture en étant délimitée par la face du renflement orientée vers le soubassement et par la nervure prolongeant le renflement en élévation. L'échancrure forme un canal de drainage de l'humidité hors de la gouttière vers l'ouverture.

Selon une forme de réalisation, la nervure affleure la face supérieure du carénage et présente une dimension d'extension en élévation inférieure ou égale à la dimension en élévation du renflement hors du soubassement. L'extension de la ceinture hors et à l'intérieur du soubassement est ainsi limitée, tout en ménageant la gouttière et en respectant la distance de consigne entre la ceinture et l'agrafe.

L'invention a aussi pour objet un châssis de véhicule automobile équipé d'un ensemble d'éléments de carrosserie tel qu'il vient d'être décrit.

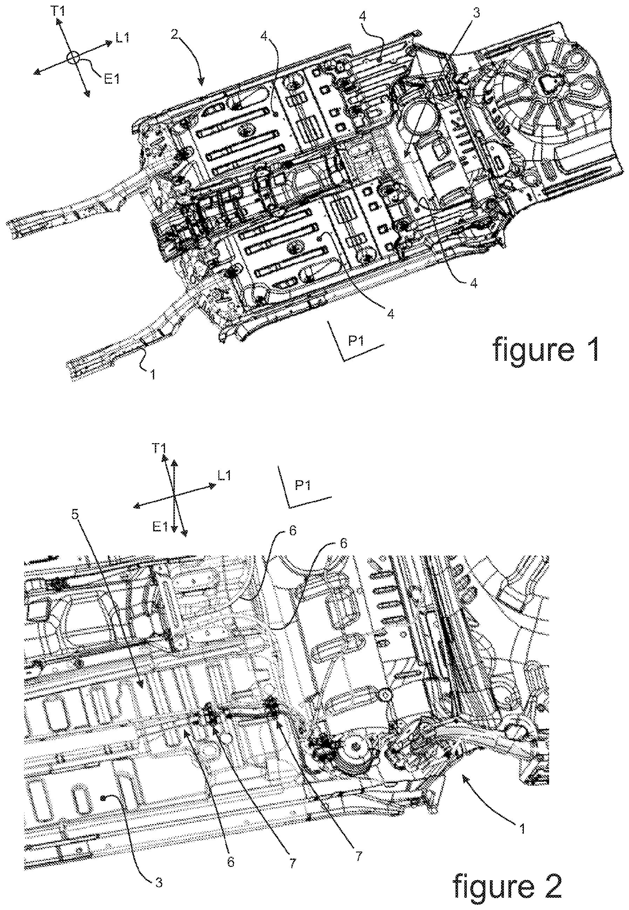

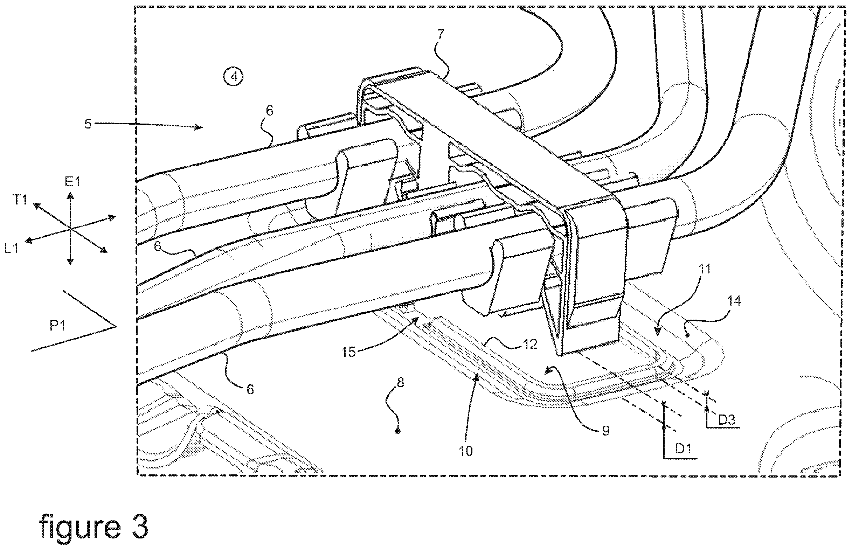

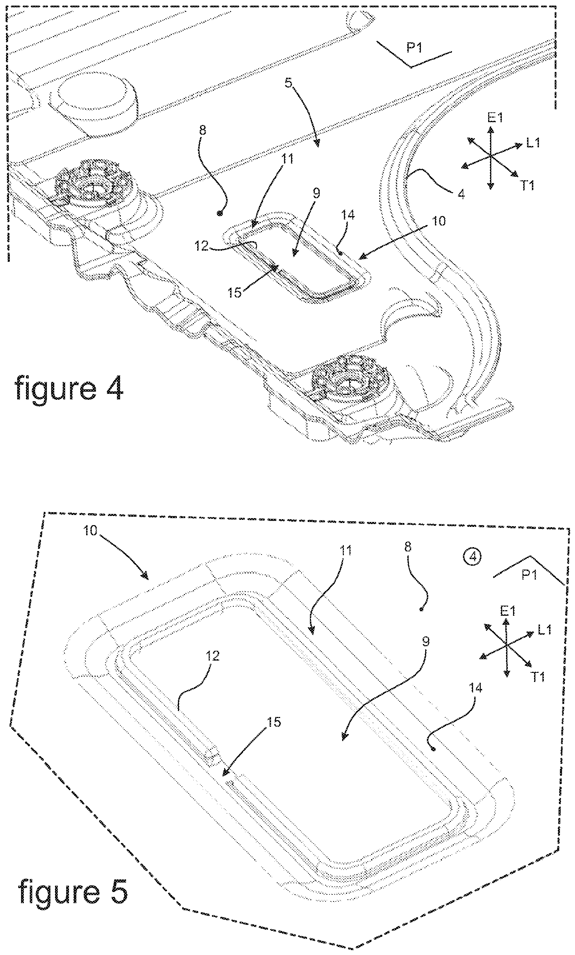

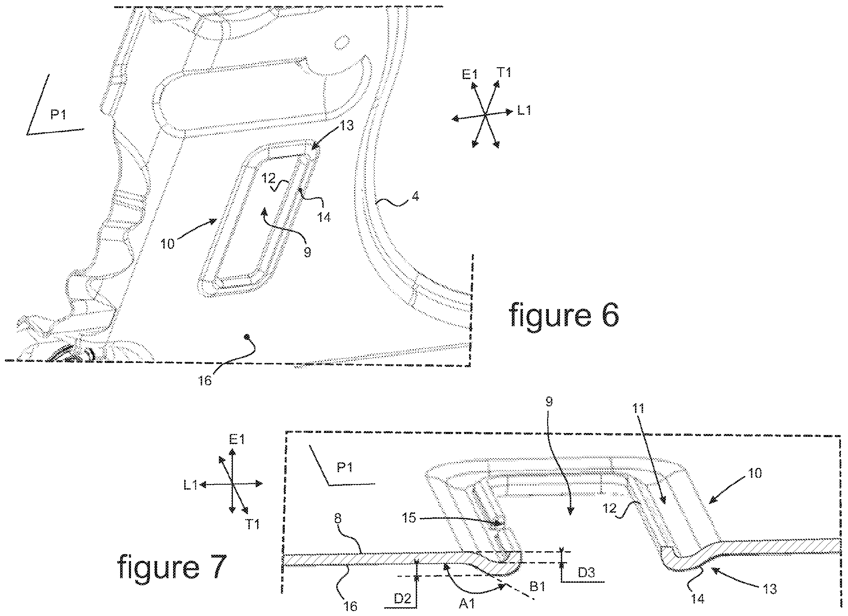

Un exemple de réalisation de la présente invention va être décrit en relation avec les figures des planches annexées, dans lesquelles :
-) la figure 1 est une représentation en perspective de dessous d'un châssis de véhicule automobile, illustrant le contexte de l'invention.
-) la figure 2 est un détail du châssis représenté sur la figure 1, dont des carénages de fond l'équipant sont retirés pour préciser le contexte de l'invention.
-) la figure 3 est une illustration partielle en perspective de dessus d'une attache surplombant un carénage de fond participant d'un ensemble d'éléments de carrosserie conforme à un exemple de réalisation de l'invention.
-) la figure 4 est une illustration partielle en perspective de dessus du carénage représenté sur la figure 3.
-) la figure 5 est un détail de la figure 4 représentant une ouverture ménagé à travers le carénage.
-) la figure 6 est une illustration partielle en perspective de dessous du carénage représenté sur les figures 3 à 5.
-) la figure 7 est une représentation en perspective de dessus tranchée de l'ouverture ménagée à travers le carénage représenté sur les figures 3 à 6.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur les figures 1 et 2, le châssis 1 d'un véhicule automobile est équipé à son fond d'un ensemble d'éléments de carrosserie 2 comprenant une plateforme 3 sous laquelle sont fixés un ou plusieurs carénages 4, au nombre de quatre sur l'exemple représenté sur la figure 1. Sur la figure 2, les carénages 4 sont retirés et sur la figure 3 la plateforme 3 est retirée pour mieux illustrer l'invention.

La plateforme 3 et les carénages 4 s'étendent globalement parallèlement entre eux suivant un plan P1 parallèle au plan de roulage du véhicule au sol. Le plan P1 d'extensions globales de la plateforme 3 et des carénages 4 est typiquement défini par une direction longitudinale L1 et une direction transversale T1 d'extension du châssis 1.

Les carénages 4 sont fixés sous la plateforme 3 et procurent notamment une protection au châssis 1 vis-à-vis de heurts qu'il est susceptible de subir à son fond. Les carénages 4 s'étendent classiquement à distance en élévation E1 par rapport au plan de roulage du véhicule pour ménager une garde au sol prédéfinie.

Un espace est ménagé entre les carénages 4 et la plateforme 3 en s'étendant suivant la direction en élévation E1 du châssis 1. Un tel espace délimite un compartiment du châssis 1, désigné par soubassement 5, à l'intérieur duquel s'étendent des conduits 6 tel qu'illustré sur les figures 2 et 3. De tels conduits 6 sont susceptibles d'être formés d'un câble électrique et/ou d'un faisceau de câbles électriques acheminant de l'énergie électrique, et/ou encore d'une conduite d'acheminement d'un fluide.

Plus particulièrement sur les figures 2 et 3, les conduits 6 sont maintenus en position sous la plateforme 3 via une ou plusieurs attaches 7 fixées à la plateforme 3. Selon l'exemple illustré, les attaches 7 sont configurées en un ou plusieurs colliers d'enserrement des conduits 6, de préférence agencés en agrafes élastiquement déformables.

Sur la figure 3 et suivant l'extension en élévation E1 du soubassement 5, au moins une dite attache 7 est placée à une distance D1 de consigne par rapport à la face supérieure 8 du carénage 4 qui est orientée en direction de la plateforme 3 ou autrement dit vers l'intérieur du soubassement 5.

Une telle distance de consigne D1 correspond à la distance minimale admise de séparation en élévation E1 entre l'attache 7 et le carénage 4. A titre indicatif non restrictif, la distance D1 de consigne est au moins égale à 10 mm.

Pour éviter de restreindre la garde au sol du véhicule dans la zone de fixation de l'attache 7 à la plateforme 3, tout en limitant l'extension en élévation du soubassement 5 dans cette zone, le carénage 4 comporte une ouverture 9 ménagée en regard de la totalité de l'attache 7.

Sur les figures 3 à 7, l'ouverture 9 est bordée par une ceinture 10 de renfort, qui est ménagée le long du bord périphérique de l'ouverture 9 la délimitant. La ceinture 10 est configurée en gouttière 11 orientée vers l'intérieur du soubassement 5 pour collecter l'humidité présente dans le soubassement 5.

A cet effet, la ceinture 10 comprend une nervure 12, mise en évidence sur les figures 3 à 5 et sur la figure 7. La ceinture 10 comprend aussi un renflement 13 mis en évidence sur les figures 6 et 7. La nervure 12 et le renflement 13 sont ménagés en prolongement l'un de l'autre suivant des directions concourantes l'une par rapport à l'autre, en ménageant entre eux la gouttière 11.

La nervure 12 est ménagée au bord périphérique de l'ouverture 9 et s'étend en élévation E1 à l'intérieur du soubassement 5, tandis qu'une paroi 14 ménageant le renflement 13 s'étend vers l'extérieur du soubassement 5.

Plus particulièrement, la nervure 12 est étendue en élévation E1 depuis le fond de la gouttière 11 jusqu'à affleurer la face supérieure 8 du carénage 4 qui est orientée vers l'intérieur du soubassement 5 dans sa zone environnant l'ouverture 9. La nervure 12 comporte à son travers une échancrure 15 de drainage de l'humidité collectée par la gouttière 11, pour son évacuation hors du soubassement 5 à travers l'ouverture 9.

Plus visible sur la figure 7, le renflement 13 est ménagé en saillie vers l'extérieur du soubassement 5 pour former le fond en creux de la gouttière 11 orienté vers l'intérieur du soubassement 5. La dimension D2 en élévation de la ceinture 10 hors du soubassement 5 est ainsi limitée pour conserver une garde sol satisfaisante dans la zone de fixation des conduits 6 à la plateforme 3.

La paroi 14 formant le renflement 13 est inclinée B1 par rapport au plan P1 d'extension globale du carénage 4 vers l'extérieur du soubassement 5. L'inclinaison B1 de la paroi est réalisée en direction de l'ouverture 9 depuis la face inférieure 16 du carénage 4 qui est orientée vers l'extérieur du soubassement 5, jusqu'à la nervure 12, pour la mise en prolongement de la paroi 14 et de la nervure 12 visant à former la gouttière 11.

A titre indicatif non restrictif, l'angle A1 d'inclinaison B1 de la paroi 14, ou en d'autres termes du renflement 13, est de l'ordre compris entre 20° et 40°, tel que par exemple de 30° comme illustré. Ainsi, le renflement 13 participe non seulement au renfort de l'ouverture 9 et à la formation de la gouttière 11, mais aussi forme un écran à l'encontre d'une projection de particules à travers l'ouverture 9.

La nervure 12 affleure la face supérieure 8 du carénage 4 en s'étendant en élévation E1 depuis le renflement 13 vers l'intérieur du soubassement 5 d'une dimension D3 au plus égale à la dimension D2 en élévation du renflement 13 hors du soubassement 5.

Un compromis satisfaisant est ainsi trouvé entre les diverses contraintes suivantes considérées au moins deux à deux et relevant :
-) du respect de la distance D1 de consigne pour une garde au sol donnée dans la zone de fixation des conduits 6 à la plateforme 3,
-) du renfort de l'ouverture 9 évitant de fragiliser le carénage 4
-) de la protection du bord périphérique de l'ouverture 9 vis-à-vis de dégradations susceptibles d'être produites par une projection de particules, gravillons notamment, en bordure de l'ouverture 9,
-) de la formation de la gouttière 11 via laquelle l'humidité présente dans le soubassement 5 peut être évacuée vers l'extérieur du châssis 1, notamment à travers l'ouverture 9,
-) de la protection de l'attache 7 vis-à-vis d'une projection de particules à travers l'ouverture 9 depuis l'extérieur du châssis 1, et/ou
-) de la possibilité d'un contrôle depuis l'extérieur du châssis 1 de la qualité de la fixation des conduits 6 à la plateforme 3 via l'attache 7, qui est rapide et aisé à effectuer, à moindres coûts, à travers l'ouverture 9.

## Revendications

1. Ensemble d'éléments de carrosserie (2) de fond d'un châssis (1) de véhicule automobile, comprenant une plateforme (3) sous laquelle est fixé au moins un carénage (4) globalement plan (P1) en ménageant entre eux un soubassement (5) du châssis (1), la plateforme (3) étant munie d'au moins une attache (7) qui est configurée pour la fixation d'au moins un conduit (6) et qui s'étend à l'intérieur du soubassement (5) au moins suivant une direction en élévation (E1) perpendiculaire au plan (P1) global du carénage (4), **caractérisé en ce que** le carénage (4) comporte une ouverture (9) qui s'étend en regard au moins de la totalité de l'attache (7) et qui est éloignée en élévation (E1) de l'attache (7) d'une distance (D1) conforme à une distance de consigne minimale admise de séparation en élévation (E1) entre l'attache (7) et le carénage (4).

2. Ensemble d'éléments de carrosserie (2) selon la revendication 1, **caractérisé en ce qu'**une ceinture (10) de renfort intégrée au carénage (4) est ménagée le long du bord périphérique de l'ouverture (9).

3. Ensemble d'éléments de carrosserie (2) selon la revendication 2, **caractérisé en ce que** la ceinture (10) est configurée en gouttière (11) orientée vers l'intérieur du soubassement (5).

4. Ensemble d'éléments de carrosserie (2) selon l'une quelconque des revendications 2 et 3, **caractérisé en ce que** la ceinture (10) s'étend hors du soubassement (5), en étant configurée en écran à l'encontre d'une projection de particules à travers l'ouverture (9) depuis l'extérieur du soubassement (5).

5. Ensemble d'éléments de carrosserie (2) selon l'une quelconque des revendications 2 à 4, **caractérisé en ce que** la ceinture (10) comprend une nervure (12) qui est ménagée au bord périphérique de l'ouverture (9) et qui s'étend en élévation (E1) à l'intérieur du soubassement (5).

6. Ensemble d'éléments de carrosserie (2) selon l'une quelconque des revendications 2 à 5, **caractérisé en ce que** la ceinture (10) comprend un renflement (13) du carénage (4) qui est ménagé en bordure du bord périphérique de l'ouverture (9) et qui s'étend hors du soubassement (5).

7. Ensemble d'éléments de carrosserie (2) selon la revendication 6, caractérisé en ce le renflement (13) présente une paroi (14) qui est inclinée (B1) par rapport au plan (P1) global d'extension du carénage (4).

8. Ensemble d'éléments de carrosserie (2) selon les revendications 3 à 5, **caractérisé en ce que** la gouttière (11) est délimitée entre le renflement (13) et la nervure (12) qui sont ménagés en prolongement l'un de l'autre, la nervure (12) comportant au moins une échancrure (15) de drainage vers l'ouverture (9) de l'humidité collectée par la gouttière (11).

9. Ensemble d'éléments de carrosserie (2) selon l'une quelconque des revendications 6 à 8 lorsqu'elle dépend de la revendication 5, **caractérisé en ce que** la nervure (12) affleure la face supérieure (8) du carénage (4) et présente une dimension (D3) d'extension en élévation (E1) inférieure ou égale à la dimension (D2) en élévation (E1) du renflement (13) hors du soubassement (5).

10. Châssis (1) de véhicule automobile équipé d'un ensemble d'éléments de carrosserie (2) selon l'une quelconque des revendications 1 à 9.

## Patentansprüche

1. Anordnung von Karosserieteilen (2) am Boden eines Kraftfahrzeugrahmens (1), mit einer Plattform (3), unter der mindestens eine im Wesentlichen ebene Verkleidung (4) befestigt ist, wobei zwischen ihnen ein Unterteil (5) des Rahmens (1) angeordnet ist, wobei die Plattform (3) mit mindestens einer Klammer (7) versehen ist, die zur Befestigung mindestens einer Leitung (6) ausgebildet ist und die sich innerhalb des Unterteils (5) mindestens in einer zur Gesamtebene (P1) der Verkleidung (4) senkrechten Höhenrichtung (E1) erstreckt, **dadurch gekennzeichnet, dass** Die Verkleidung (4) weist eine Öffnung (9) auf, die sich zumindest gegenüber der gesamten Klammer (7) erstreckt und die in einer Höhe (E1) von der Klammer (7) um einen Abstand (D1) entfernt ist, der einem minimalen zulässigen Sollabstand (E1) zwischen der Klammer (7) und der Verkleidung (4) entspricht.

2. Karosseriebauteil (2) nach Anspruch 1, **dadurch gekennzeichnet, dass** ein Verstärkungsgurt (10), der in die Verkleidung (4) integriert ist, entlang des Umfangsrandes der Öffnung (9) ausgebildet ist.

3. Karosseriebauteil (2) nach Anspruch 2, **dadurch gekennzeichnet, dass** der Gurt (10) als zum Inneren des Unterteils (5) gerichtete Rinne (11) ausgebildet ist.

4. Karosseriebauteil (2) nach einem der Ansprüche 2 und 3, **dadurch gekennzeichnet, dass** sich der Gurt (10) aus dem Unterbau (5) erstreckt.

5. Karosseriebauteil (2) nach einem der Ansprüche 2 bis 4, **dadurch gekennzeichnet, dass** der Gurt (10) eine Rippe (12) umfasst, die am Umfangsrand der Öffnung (9) ausgebildet ist und sich in einer Erhebung (E1) in das Innere des Unterteils (5) erstreckt.

6. Karosseriebauteil (2) nach einem der Ansprüche 2 bis 5, **dadurch gekennzeichnet, dass** der Gurt (10) eine Verdickung (13) der Verkleidung (4) umfasst, die am Rand des Umfangsrandes der Öffnung (9) ausgebildet ist und sich aus dem Unterteil (5) erstreckt.

7. Karosserieelementensatz (2) nach Anspruch 6, **dadurch gekennzeichnet, dass** die Verdickung (13) eine Wand (14) aufweist, die in Bezug auf die Gesamtausdehnungsebene (P1) der Verkleidung (4) geneigt (B1) ist.

8. Karosseriebauteil (2) nach den Ansprüchen 3, 5 und 6, **dadurch gekennzeichnet, dass** die Rinne (11) zwischen der Verdickung (13) und der Rippe (12) begrenzt ist, die in Verlängerung zueinander ausgebildet sind, wobei die Rippe (12) mindestens eine Aussparung (15) zur Entwässerung zur Öffnung (9) der von der Rinne (11) gesammelten Feuchtigkeit aufweist.

9. Karosserieelementensatz (2) nach Anspruch 5 und einem der Ansprüche 6 bis 8, wenn abhängig von Anspruch 5, **dadurch gekennzeichnet, dass** die Rippe (12) mit der Oberseite (8) der Verkleidung (4) bündig ist und eine Abmessung (D3) mit einer Höhenerstreckung (E1) aufweist, die kleiner oder gleich der Höhenabmessung (D2) der Ausbauchung (13) aus dem Unterbau (5) ist.

10. Fahrgestell (1) für ein Kraftfahrzeug, **dadurch gekennzeichnet, dass** es mit einer Anordnung von Karosserieelementen (2) nach einem der Ansprüche 1 bis 9 ausgestattet ist.

## Claims

1. Set of body elements (2) of the bottom of a chassis (1) of a motor vehicle, comprising a platform (3) under which is attached at least one shroud (4) globally plane (P1) by allowing between them a base (5) of the chassis (1), the platform (3) being equipped with at least one attachment (7) which is configured for the attachment of at least one duct (6) and extends within the substructure (5) at least in an elevating direction (E1) perpendicular to the overall plane (P1) of the shroud (4), **characterised by** the shroud (4) having an opening (9) that extends next to at least the whole of the tie (7) and is raised away (E1) from the tie (7) a distance (D1) that conforms to an acceptable minimum set distance of elevation separation (E1) between the attachment (7) and the shroud (4).

2. Set of body elements (2) according to claim 1, **characterised by** a reinforcement belt (10) integrated into the shroud (4) along the peripheral edge of the opening (9).

3. Set of body elements (2) according to claim 2, **characterised in that** the belt (10) is configured as a gutter (11) orientated inside the base (5).

4. Body elements (2) according to any of claims 2 and 3, **characterised by** the belt (10) extending out of the base (5).

5. Set of body elements (2) according to any of claims 2 to 4, **characterised in that** the belt (10) includes a rib (12) which is arranged at the peripheral edge of the opening (9) and which extends upwards (E1) inside the base (5).

6. Set of body elements (2) according to any of claims 2 to 5, **characterised in that** the belt (10) includes a bulge (13) of the shroud (4) which is arranged on the edge of the peripheral edge of the opening (9) and which extends out of the base (5).

7. Body elements set (2) according to claim 6, **characterised in that** the bulge (13) presents a wall (14) which is inclined (B1) in relation to the overall plane (P1) of extension of the shroud (4).

8. Body elements set (2) according to claims 3, 5 and 6, **characterised in that** the gutter (11) is delimited between the bulge (13) and the rib (12) which are arranged as an extension of each other, the rib (12) having at least one gap (15) of drainage towards the opening (9) moisture collected by the gutter (11).

9. Set of body elements (2) according to claim 5 and any of claims 6 to 8 when it depends on claim 5, **characterised in that** the rib (12) displays the upper face (8) of the shroud (4) and has a dimension (D3) of extension in elevation (E1) less than or equal to the dimension (D2) in elevation (E1 (1) the bulge (13) out of the base (5).

10. Chassis (1) of motor vehicle **characterised in that** it is equipped with a set of body elements (2) according to any of claims 1 to 9.
